# EUROPÄISCHE PATENTSCHRIFT

(11) **EP 3 411 940 B1**
(45) Veröffentlichungstag und Bekanntmachung des Hinweises auf die Patenterteilung: **23.10.2019**
(21) Anmeldenummer: 17711084.8
(22) Anmeldetag: 30.01.2017
(51) Int. Cl.: H02K 3/52, H02K 5/08, H02K 5/132

(54) **ELEKTROMOTOR FÜR EINE FLUIDPUMPE, MODULARE MOTORFAMILIE ZUR BILDUNG UNTERSCHIEDLICHER FLUIDPUMPEN MIT MEHREREN SOLCHER ELEKTROMOTOREN UND HERSTELLUNGSVERFAHREN**
ELECTRIC MOTOR FOR A FLUID PUMP, MODULAR MOTOR FAMILY FOR FORMING DIFFERENT FLUID PUMPS WITH SEVERAL OF SAID TYPES OF ELECTRIC MOTORS AND PRODUCTION METHOD
MOTEUR ÉLECTRIQUE DESTINÉ À UNE POMPE À FLUIDE, FAMILLE DE MOTEURS MODULAIRE POUR FORMER DES POMPES À FLUIDE DIFFÉRENTES COMPORTANT PLUSIEURS DESDITS MOTEURS ÉLECTRIQUES ET PROCÉDÉ DE FABRICATION

(30) Priorität: 04.02.2016 DE 102016101963
(43) Veröffentlichungstag der Anmeldung: 12.12.2018
(73) Patentinhaber: Bühler Motor GmbH, 90459 Nürnberg (DE)
(72) Erfinder: BERNREUTHER, Georg, 90449 Nürnberg (DE); RICHTER, Olaf, 90547 Stein (DE); AHRENS, Matthias, 90455 Nürnberg (DE); WALL, Andreas, 90453 Nürnberg (DE); SCHEER, Arnold, 04275 Leipzig (DE)
(86) Internationale Anmeldenummer: PCT/DE2017/200012
(87) Internationale Veröffentlichungsnummer: WO 2017/133737

(56) Entgegenhaltungen:
- WO-A2-2013/053357
- DE-A1- 10 102 235
- US-A1- 2006 232 143
- US-A1- 2011 193 430
- US-A1- 2013 169 073
- US-A1- 2014 099 217
- US-A1- 2015 302 963

## Beschreibung

Die Erfindung betrifft einen Elektromotor für eine Fluidpumpe, insbesondere eine Ölpumpe. Ferner betrifft die Erfindung eine modulare Motorenfamilie und ein Verfahren zur Herstellung eines Elektromotors für eine Fluidpumpe.

Erfahrungsgemäß werden Elektromotoren zum Antrieb verschiedener Fahrzeuge und Maschinen, insbesondere Ölpumpen verwendet. Das Funktionsprinzip eines Elektromotors beruht auf der Umwandlung von elektrischer Energie in mechanische Energie. Dabei wird die von einem Magnetfeld ausgeübte Kraft auf die stromdurchflossenen Leiter des Elektromotors in Bewegung und Rotation umgesetzt.

Bekanntermaßen werden zum Antrieb von Pumpen zur Ölförderung bürstenlose Gleichstrommotoren, sogenannte BLDC Motoren eingesetzt. Ein derartiger Elektromotor ist beispielhaft aus DE 101 02 235 A1 bekannt. Der Motor umfasst einen feststehenden Stator, der Spulenwicklungen enthält, welche von einer elektronischen Schaltung zeitlich versetzt angesteuert sein können. Im Stator befindet sich ein drehbar gelagerter Rotor. Üblicherweise sind Rotoren mit einem Permanentmagneten realisiert. Fließt in den Statorwicklungen ein elektrischer Strom, so bildet sich im Stator ein Magnetfeld aus. Dieses Magnetfeld durchsetzt auch die Permanentmagneten des Rotors. Auf den Rotor wirkt ein Drehmoment, das den Rotor in eine Drehbewegung versetzt. Damit die Drehbewegung des Rotors nicht zum Stillstand kommt, muss der Stromfluss in den Statorwicklungen rechtzeitig so umgeschaltet werden, dass sich das erzeugte Magnetfeld weiterdreht und auf den Rotor weiterhin ein Drehmoment wirkt.

EP 1 523 087 A1 betrifft einen Elektromotor mit einem im Wesentlichen geschlossenen Motorgehäuse, das einen Rotor und einen Stator aufnimmt, mit einem Motorflansch, der einen Abschnitt des Motorgehäuses bildet, mit einer Elektronik zum Steuern des Elektromotors, und mit einem im Wesentlichen geschlossenen Elektronikgehäuse, das die Elektronik aufnimmt und mit dem Motorgehäuse verbunden ist. Das Elektronikgehäuse und das Motorgehäuse bilden hierbei zwei separate Gehäuseeinheiten.

Wie in EP 1 523 087 A1 beschrieben ist, wird im Elektronikgehäuse die Elektronik zur Steuerung des Motors integriert. Durch Regulierung der Ströme in den Statoren lässt sich ein Magnetfeld mit veränderlicher Richtung und Größe erzeugen. Die Elektronik kann jede Art von Steuerungselektronik umfassen, mit der der Elektromotor gesteuert werden kann. Die Steuerungselektronik ist typischerweise motorabhängig. Gleichstrommotoren brauchen eine Steuerungselektronik zum Kommutieren der elektrischen Versorgungsströme auf die einzelnen Statorwicklungen. Wechselstrommotoren benötigen beispielsweise eine Elektronik zum Regeln ihrer Drehzahl.

Aus der nächstliegenden US 2006/232143 A1 ist ein Elektromotor, nach dem Oberbegriff des Anspruchs 1, für eine Fluidpumpe, insbesondere eine Ölpumpe, mit einem Gehäuse, indem ein Stator, ein Rotor und eine Abgriffplatte angeordnet sind, wobei die Abgriffplatte Verschaltungskontakte zur elektrischen Verbindung mit Wicklungen des Stators, die Abgriffplatte durch ein Kunststoffmaterial gebildet ist und der Stator durch eine Umspritzung ummantelt ist, die einen Lagersitz für den Rotor bildet, bekannt.

Die US 2014/099217 A1 offenbart eine Kraftstoffpumpe, die eine mit einer umspritzten Abgriffplatte mit Verbindungselemente zur Verbindung mit einer Steuerelektronik aufweist.

Aus der US 2011/193430 A1 ist ein Motor mit einem Stator bekannt, der ein Gehäuse beinhaltet, das durch integrales Formen einer Ankerwicklung und einer Leiterplatte mit Kunststoff, das ein faseriges Verstärkungsmaterial und Füllstoff enthält, gebildet ist; einen Magnetrotor, der drehbar angeordnet ist, um dem Stator gegenüber zu stehen; und eine Vielzahl von Zuleitungsdrähten, die nach außen geführt sind. Die Leiterplatte ist mit einer Vielzahl von Stegen versehen, die die Zuleitungsdrähte durch Löten verbinden, und einem runden Loch zwischen der Vielzahl von Stegen, die mit dem Kunststoff gefüllt sind, und das Verstärkungsmaterial ist in einer Leiterplattendickenrichtung der Leiterplatte ausgerichtet. Die Steuerung der Spule des Motors wird mit Hilfe des Signals eines Hall Sensors berechnet.

Die US 2015/302963 A1 offenbart ein Verfahren zum Formen einer elektromagnetischen Antriebsspuleneinheit, die ausreichende Festigkeit und wasserdichte Eigenschaften gewährleisten kann sowie ein Verfahren zum Formen einer elektromagnetischen Antriebsspuleneinheit, bei der eine Statoranordnung Spulen mit darauf gewickelten Statorspulen und Joche beinhaltet, bei der ein Innenjoch mit Magnetpolzähnen und ein Außenjoch mit Magnetpolzähnen kombiniert werden und bei der die Statoranordnung und eine Stromversorgungsklemme, die die Spulen mit Strom versorgt, in einem Kunststoff geformt werden, ein innerer Formprozess an der Innenseite des äußeren Jochs in einem Zustand durchgeführt wird, in dem die Enden der Statorspulen der Statoranordnung mit der Stromversorgungsklemme verbunden sind, und ein äußerer Formprozess durchgeführt wird, um einen Außenumfang der Statoranordnung abzudecken, der einen inneren geformten Abschnitt und eine Außenseite der Stromversorgungsklemme nach dem inneren Formprozess aufweist. Das Gehäuse des Motors ist in einer Weise umspritzt, so dass ein Teil des Rotors bedeckt wird.

Zusätzlich zur Steuerungselektronik kann auch eine Positionierelektronik in das Elektronikgehäuse eingebracht sein. Es gibt verschiedene Möglichkeiten, die Position des Rotors zu messen. Beispielsweise können mehrere Hall-Sensoren am Rotorende montiert werden. Die durch die Rotation erzeugten Magnetfeldänderungen und somit die Position des Rotors, können vom Hall-Sensor erfasst werden. Durch Positionssensoren ist eine differenzierte und effiziente Steuerung des Drehmomentes des Motors auch bei hohen Geschwindigkeiten möglich.

Elektromotoren ist in der Vergangenheit meistens kundenorientiert gearbeitet worden. Das bedeutet, dass die bisherigen Motoren ausschließlich nach Kundenwunsch und speziellem Verwendungszweck des Motors entwickelt wurden. Eine flexible Verwendung eines Elektromotors für verschiedene Einsatzbereiche ist dadurch nicht gegeben. Die fertigen Motoren waren für neue Kundenanfragen nicht geeignet oder adaptierbar. Als Folge davon müssen für einen anderen Verwendungszweck unter hohen Kosten erneut kundenspezifische Motoren hergestellt werden. Dies führt auch zu zusätzlichen hohen Montage- und Reparaturkosten.

Der Erfindung liegt daher die Aufgabe zugrunde, kostengünstig herstellbare Elektromotoren zu entwickeln, welche bei möglichst geringer Modifikation für verschiedene Anwendungen geeignet sind. Wichtig ist hierbei ein modularer Aufbau des Elektromotors, welcher ohne großen Änderungsaufwand für einen anderen Verwendungszweck umgestaltet werden kann. Ferner ist es Aufgabe der Erfindung, eine modulare Motorenfamilie mit umfassenden Elektromotoren, sowie ein Herstellungsverfahren eines Elektromotors anzugeben.

Diese Aufgabe wird erfindungsgemäß durch einen Elektromotor mit den Merkmalen des Anspruchs 1 gelöst. Ferner wird die Aufgabe der Erfindung im Hinblick auf die modulare Motorenfamilie durch den Gegenstand des Anspruchs 10 gelöst. Im Hinblick auf das Herstellungsverfahren wird die Aufgabe durch den Gegenstand des Anspruchs 17 gelöst.

Die Erfindung beruht auf dem Gedanken, einen Elektromotor für eine Fluidpumpe, insbesondere eine Ölpumpe, anzugeben, welcher ein Gehäuse umfasst, in dem ein Stator, ein Rotor und eine Abgriffplatte angeordnet sind, wobei die Abgriffplatte Verschaltungskontakte zur elektrischen Verbindung mit Wicklungen des Stators und Verbindungselemente zur Verbindung mit einer Steuerungselektronik und/oder Positionierelektronik aufweist, die Abgriffplatte durch ein Kunststoffmaterial gebildet und/oder umspritzt ist, und der Stator durch eine Umspritzung ummantelt ist, die einen Lagersitz für den Rotor bildet. Das Gehäuse des Motors weist einen Aufnahmeraum für eine Steuerungselektronik und/oder Positionierelektronik auf. Der Aufnahmeraum kann hierbei axial oder radial in Bezug auf die Motorachse angeordnet sein. Der Aufnahmeraum kann vom Stator durch eine Trennwand separiert sein. Eine Trennung der Elektronik vom Stator ermöglicht eine vereinfachte Reparatur bei vorliegender Beschädigung oder Fehlfunktion, da die Elektronik innerhalb des Aufnahmeraums schnell zugänglich ist.

Ferner beruht die Erfindung auf dem Gedanken, eine modulare Motorenfamilie zur Bildung unterschiedlicher, insbesondere unterschiedlich leistungsstarker, Fluidpumpen umfassend mehrere, bürstenlose Elektromotoren anzugeben, wobei jeder Elektromotor ein Gehäuse aufweist, in dem ein Stator und ein Rotor und/oder eine Abgriffplatte angeordnet sind, wobei die Abgriffplatte Verschaltungskontakte zur elektrischen Verbindung mit Wicklungen des Stators und Verbindungselemente zur Verbindung mit einer Steuerungselektronik und/oder Positionierelektronik aufweist, und der Stator durch eine Umspritzung ummantelt ist, die einen Lagersitz für den Rotor bildet und wobei sich die einzelnen Elektromotoren durch unterschiedliche Motordurchmesser und/oder Motorlängen und/oder Ausstattungsvarianten voneinander unterscheiden.

Ein modularer Aufbau eines Elektromotors, sowie die Entwicklung einer Motorenfamilie bringt eine Vielzahl an Vorteilen. Durch den modularisierten und somit standardisierten Motorenaufbau lassen sich die Entwicklungs- und Geschäftsprozesskosten niedrig halten. Baugleiche Serien von Motorenfamilien sind billig in der Herstellung und gewährleisten einfachere Montageprozesse. Hinsichtlich der Wartung der Motoren kann durch einen modularen Aufbau eine kostengünstige Reparatur garantiert werden. Insbesondere kann dadurch ein einfacher Austausch fehlerhafter oder beschädigter Komponente erreicht werden.

Zusätzlich bietet ein standardisierter Aufbau eine große Flexibilität im Produktangebot, sowie eine vielfältige Produktvarietät. Wenn verschiedene Module eines Motors zur Verfügung stehen, kann der Motor schnell und einfach an neue Bedingungen angepasst werden. Die standardisierten Motormodule können einfach neu angebracht, entfernt, gewechselt oder anderweitig gruppiert werden. Somit lassen sich mit einem modulhaften Motoraufbau mehrere kundenspezifische Verwendungszwecke realisieren.

Bei einer bevorzugten Ausführungsform kann der Motor einen möglichst kleinen Bauraum umfassen. Der Motor umfasst hierbei beispielhaft ein Gehäuse, in dem ein Stator, ein Rotor, sowie eine Abgriffplatte angeordnet sind. Die Abgriffplatte weist Verschaltungskontakte zur elektrischen Verbindung mit den Wicklungen des Stators auf. Die Verschaltungskontakte können beispielsweise als Flachstecker ausgebildet sein. Im Hinblick auf die Motorenfamilie aus modularisierten Motoren sind wenigstens zwei verschiedene Statorlängen und/oder Motorendurchmesser denkbar. Mit skalierbaren Motorlängen kann bereits eine Vielzahl an Anwendungen abgedeckt werden.

Der Stator ist vorzugsweise durch eine Umspritzung ummantelt, welche einen Lagersitz für den Rotor ausbildet. Die Umspritzung dient der Abdichtung des Motors . Damit kann der Motor im Spritzwasserbereich eingesetzt werden und eine Separierung zwischen Nass- und Trockenraum gewährleistet werden. Vorteilhaft ist die Abgriffplatte durch ein Kunststoffmaterial, insbesondere ein Duroplastmaterial, gebildet und/oder umspritzt. Vor allem die sensible Elektronik ist idealerweise zur Öldichtheit umspritzt und somit vor äußerer Beschädigung geschützt. Es ist denkbar, dass die Abgriffplatte und der Stator dieselbe, beziehungsweise eine einheitliche, insbesondere gemeinsame, Umspritzung aufweisen.

Vorteilhafterweise kann die Abgriffplatte durch ein Stanzgitter gebildet sein. Stanzgitter eignen sich besonders in Bereichen, bei denen elektrische Ströme auf engem Raum verteilt werden müssen. Das Stanzgitter selbst kann mit Kunststoff ummantelt sein. Dies sorgt wiederum für eine Abdichtung und einen Schutz der Elektronik. Es ist denkbar, dass die Oberfläche des Stanzgitters auch galvanisch veredelt ist. Der Einsatz eines Stanzgitters ist idealerweise platzsparend.

In diesem Zusammenhang ist es besonders vorteilhaft, wenn die Abgriffplatte wenigstens zwei Verbindungselemente aufweist. Die Verbindungselemente dienen der elektrischen Verbindung des Motors mit einer Elektronik. Die Verbindungselemente der Abgriffplatte können hierbei rechtwinklig oder alternativ parallel zur Abgriffplatte ausgerichtet sein. Die unterschiedliche Ausrichtung der Verbindungselemente ermöglicht eine vielfältige Ausrichtung des Motors innerhalb des Aggregats und zur Fluidpumpe. Die Statorumspritzung enthält bei dieser Ausführungsform vorzugsweise ein Steckergehäuse zur sicheren Aufnahme der Verbindungselemente.

Idealerweise ist die Abgriffplatte mit einem Kunststoffmaterial oder Keramikmaterial verschweißt oder warmverpresst. Die Erfindung ist nicht auf ein Kunststoffmaterial oder Keramikmaterial beschränkt. Es sind weitere isolierende Materialien, wie beispielsweise Glas denkbar. In einer alternativen Ausführungsform ist die Abgriffplatte mit einem Kunststoffmaterial verklebt und/oder beklebt und/oder vergossen und/oder umspritzt.

Vorteilhafterweise erstrecken sich die Verbindungselemente durch die Trennwand. Die Trennwand kann beispielsweise eine Seitenwand oder eine axiale Abschlusswand oder eine Zwischenwand des Gehäuses bilden.

Bei einer bevorzugten Ausführungsform ist im Aufnahmeraum eine Platine für die Steuerungselektronik und/oder Positionierelektronik angebracht. Die Platine ist mit den Verbindungselementen elektrisch verbindbar oder verbunden. Idealerweise ist die Platine und damit auch die Elektronik mit einem Kunststoffmaterial oder Keramikmaterial umspritzt. Dies schützt die sensible Elektronik vor äußerer Beschädigung und sorgt für eine Öldichtheit der elektrischen Anschlüsse.

In einer vorteilhaften Gestaltung der Erfindung ist der Aufnahmeraum der Elektronik mit einem Deckel abgedichtet. Dieser Deckel kann beispielhaft mit einer Gummidichtung versehen sein. Die Gummidichtung kann ein O-Ring sein oder als Flachdichtung ausgeführt sein. Alternativ kann die Dichtung als Liquid Silicon Rubber Spritzguss beziehungsweise als spritzgegossenes Flüssigsilikon ausgeführt sein. Der Deckel kann abdichtend mit dem Aufnahmeraum beziehungsweise einer Aufnahmetasche verbunden sein. Diese Verbindung kann stoff- oder kraftschlüssig, beispielsweise durch Kleben, Schweißen oder Verschrauben, erfolgen. Am Deckel kann einstückig ein Steckergehäuse für die Verbindungselemente der Abgriffplatte angeformt sein.

Idealerweise weist die Umspritzung ein Kunststoffmaterial, insbesondere ein Duroplastmaterial oder alternativ ein Thermoplastmaterial auf. Das Kunststoffmaterial des Gehäuses kann einteilig oder einstückig mit dem Kunststoffmaterial zum Umspritzen der Abgriffplatte und/oder der Platine ausgebildet sein. Ein Duroplastmaterial besitzt eine hohe Steifigkeit, um den Motor oder die Abgriffplatte mit der Elektronik gegen äußere Deformation oder Beschädigung zu schützen. Zusätzlich weist das Duroplastmaterial eine hohe thermische und chemische Beständigkeit auf.

Ein nebengeordneter Aspekt der Erfindung betrifft eine modulare Motorenfamilie zur Bildung unterschiedlich leistungsstarker Fluidpumpen mit mehreren umfassenden bürstenlosen Elektromotoren. Als Gemeinsamkeit haben alle Elektromotoren ein Gehäuse, in dem ein Stator und ein Rotor und/oder eine Abgriffplatte angeordnet sind, sowie eine Umspritzung des Stators. Die Abgriffplatte weist Verschaltungskontakte zur elektrischen Verbindung mit den Wicklungen des Stators auf, sowie Verbindungselemente zur Verbindung mit einer Steuerungselektronik und/oder Positionierelektronik. Die einzelnen Elektromotoren unterscheiden sich jedoch durch die folgenden modularen Ausstattungsmerkmale:
Die Elektromotoren können unterschiedliche Motordurchmesser und/oder Motorlängen aufweisen. Dadurch eignen sie sich für unterschiedliche Maschinen sowie deren unterschiedliche Verwendungszwecke.

Die Elektromotoren können eine Steuerungselektronik zur Ansteuerung von Wicklungen des Stators und/oder wenigstens einen in den Elektromotor integrierten Positionssensor aufweisen. Die Elektronik kann in dem Gehäuse angeordnet sein. Die Integration der Steuerungselektronik oder einer Positionselektronik richtet sich nach dem Leistungsprinzip und Verwendungszweck des jeweiligen Motors. Die Positionselektronik ermöglicht beispielsweise bei Motoren mit hohen Geschwindigkeiten und Drehzahlen eine genaue Steuerung und Positionierung des Rotors. Damit ist auch beispielsweise eine genaue Geschwindigkeitsregulierung, Beschleunigungs- und Positionssteuerung gewährleistet. Eine effektive Drehmomentsteuerung sorgt für mehr Leistungsfähigkeit und verhindert ruckartige sowie andere unerwünschte mechanische Effekte, die durch Drehmomentschwankungen verursacht werden können.

Vorteilhaft kann das Gehäuse in einer Ausstattungsvariante an einem längsaxialen Ende einen stirnseitigen Aufnahmeraum für die Steuerungselektronik und/oder Positionierelektronik bilden. Hierbei kann die Abgriffplatte wenigstens zwei Verbindungselemente aufweisen, die rechtwinklig zu einer Ringfläche der Abgriffplatte ausgerichtet sind und in den stirnseitigen Aufnahmeraum einragen.

Alternativ kann das Gehäuse in einer Ausstattungsvariante auf einem Umfang einen umfangsseitigen Aufnahmeraum für die Steuerungselektronik und/oder Positionierelektronik bilden. Wiederum kann die Abgriffplatte wenigstens zwei Verbindungselemente aufweisen, die parallel zu einer Ringfläche der Abgriffplatte ausgerichtet sind und in den umfangsseitigen Aufnahmeraum einragen.

Generell kann die Motorenfamilie mehrere Elektromotoren unterschiedlicher Motordurchmesser und/oder Motorlängen umfassen, wobei die Elektromotoren mit oder ohne Positionssensor und/oder mit oder ohne Steuerungselektronik ausgerüstet und gemäß dem weiter oben beschriebenen Aufbau eines Elektromotors konstruiert sind. Die mögliche Ausstattung mit verschiedenen Elektronikausführungen und/oder Motorlängen erweitert die Einsetzbarkeit der Motoren für verschiedenste Verwendungszwecke, insbesondere im Bereich der Fluidpumpen und Ölpumpen. Dadurch wird eine große Produktvarietät garantiert.

Ein weiterer nebengeordneter Aspekt der Erfindung betrifft ein Verfahren zur Herstellung eines Elektromotors mit vorbestimmten Spezifikationen für eine Fluidpumpe, insbesondere eine Ölpumpe. Das Verfahren eignet sich insbesondere zur Herstellung eines Elektromotors für eine Motorfamilie mit den zuvor erläuterten Merkmalen, wobei mehrere Standardkomponenten miteinander kombiniert werden, um eine zuvor festgelegte Spezifikation zu erfüllen. Die Standardkomponenten umfassen ein oder mehrere Elektromotoren mit unterschiedlichen Motordurchmessern und/oder Motorlängen, ein oder mehrere unterschiedliche Positionssensoren zur Integration in die Elektromotoren, und/oder ein oder mehrere unterschiedliche Steuerungselektroniken zur Steuerung der Elektromotoren, wobei die Steuerungselektroniken in einem Aufnahmeraum eines Gehäuses des Elektromotors anordbar sind.

Die Erfindung wird nachstehend mit weiteren Einzelheiten unter Bezug auf die beigefügten schematischen Zeichnungen näher erläutert. Darin zeigen
- Fig. 1: eine perspektivische Ansicht eines Stators eines erfindungsgemäßen Elektromotors nach einem bevorzugten Ausführungsbeispiel;
- Fig. 2: eine perspektivische Ansicht eines erfindungsgemäßen Elektromotors nach einem bevorzugten Ausführungsbeispiel mit Stator gemäß Fig. 1, Rotor und integrierter Abgriffplatte;
- Fig. 3: eine perspektivische Ansicht einer kunststoffumspritzten Abgriffplatte des Elektromotors gemäß Fig. 2;
- Fig. 4: eine perspektivische Ansicht eines Stanzgitters der Abgriffplatte gemäß Fig. 3;
- Fig. 5: eine perspektivische Ansicht eines Gehäuses des Elektromotors gemäß Fig. 2;
- Fig. 6: eine perspektivische Ansicht eines alternativen Gehäuses für den Elektromotor gemäß Fig. 2 mit einem Aufnahmeraum und darin integrierter Positionierelektronik;
- Fig. 7: eine perspektivische Ansicht des Gehäuses gemäß Fig. 6 mit montierter Platine;
- Fig. 8: eine perspektivische Ansicht des Gehäuses gemäß Fig. 7 mit aufgesetztem Deckel und Steckergehäuse;
- Fig. 9: eine perspektivische Ansicht eines weiteren, alternativen Gehäuses für den Elektromotor gemäß Fig. 2 mit einem Aufnahmeraum und darin integrierter Steuerungselektronik;
- Fig. 10: eine perspektivische Ansicht des Gehäuses gemäß Fig. 9 mit montierter Platine;
- Fig. 11: eine perspektivische Ansicht des Gehäuses gemäß Fig. 10 mit aufgesetztem Deckel und Steckergehäuse;
- Fig. 12: eine perspektivische Ansicht eines Gehäuses für einen erfindungsgemäßen Elektromotor nach einem weiteren bevorzugten Ausführungsbeispiel, wobei das Gehäuse einen radial angeordneten Aufnahmeraum aufweist; und
- Fig. 13: eine perspektivische Ansicht des Gehäuses gemäß Fig. 12, wobei der Aufnahmeraum durch einen Deckel mit einem Steckergehäuse verschlossen ist.

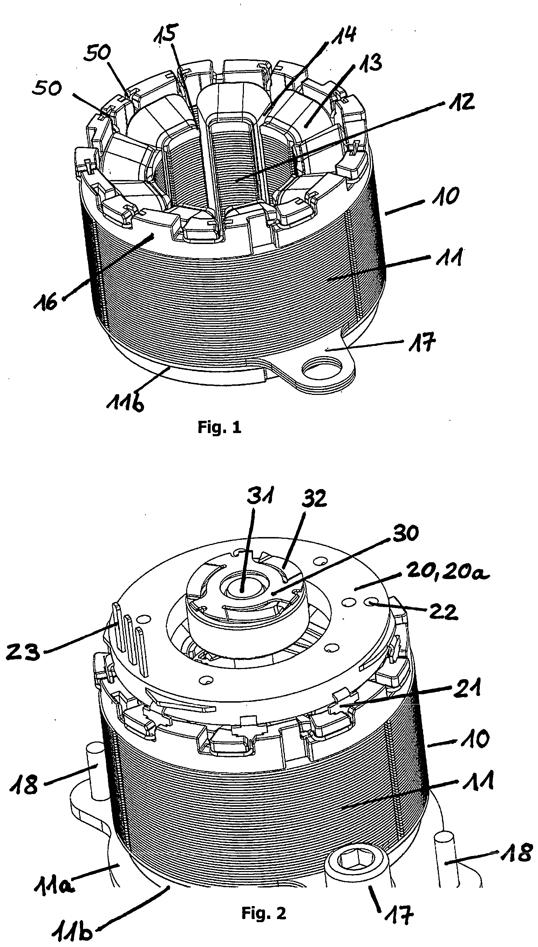

Fig. 1 zeigt eine perspektivische Ansicht eines Stators 10 eines erfindungsgemäßen Elektromotors nach einem bevorzugten Ausführungsbeispiel. Der Stator 10 umfasst ein Statorblechpaket 11 und einen Statorkern 12. Der Statorkern 12 grenzt einen hohlen zylinderförmigen Innenraum ein, in den ein Rotor 30 aufgenommen sein kann. Im Statorkern 12 können mehrere zylinderfrömige Statorzähne 13 angebracht sein. Zwischen den Statorzähnen 13 liegen längliche Statornuten 14, wobei die Statornuten 14 zum Aufnehmen von Statorwicklungen 15 ausgebildet sind. Der Stator 10 kann vorzugsweise im Bereich der Statorwicklungen 15 eine elektrische Isolierschicht aufweisen. Die Isolierschicht kann eine umspritzte Kunststoffschicht sein. An der Stirnseite des Statorblechpakets 11 befindet sich ein Isolationsring 16 zur Isolation der Verschaltungskontakte 21 der Abgriffplatte 20. Im Isolationsring 16 sind schlitzförmige Öffnungen 50 vorhanden, damit die Verschaltungskontakte 21 der Abgriffplatte 20 mit den Enden der Statorwicklungen 15 verbindbar sind. An der Unterseite des Statorblechpakets 11 ist eine Schraubvorrichtung 17 angebracht, so dass das Statorblechpaket 11 mit dem Motorgehäuse kraftschlüssig verbindbar ist.

Fig. 2 stellt eine perspektivische Ansicht eines erfindungsgemäßen Elektromotors nach einem bevorzugten Ausführungsbeispiel mit Stator 10 gemäß Fig. 1, Rotor 30 und integrierter Abgriffplatte 20 dar. Der zylinderförmige Stator umfasst ein Statorblechpaket 11 mit einem Gehäuseboden 11a. Auf dem Gehäuseboden 11a ist ein ringförmiges Trägerteil 11b angeordnet, auf welchem das Statorblechpaket 11 angebracht ist. Auf dem Gehäuseboden 11a befindet sich auf der gegenüberliegenden Seite eine Schraubvorrichtung 17 und eine längliche Schraubverbindung 18. Durch die Schraubvorrichtung 17 und die Schraubverbindung 18 ist der Gehäuseboden 11a mit einem Motorgehäuse kraft- und formschlüssig verbindbar. Im Statorblechpaket 11 ist nicht sichtbar ein Statorkern 12 angeordnet.

Die Abgriffplatte 20 kann auf einer Stirnseite des Stators 10 angebracht sein. Die Abgriffplatte 20 ist ringförmig mit einer inneren Öffnung für den Rotor 30 ausgebildet. An der Unterseite der Abgriffplatte 20 sind äußerlich mehrere Verschaltungskontakte 21 angebracht. Diese sind beispielhaft als Flachstecker ausgeführt. Die Verschaltungskontakte 21 verbinden die Abgriffplatte 20 mit den Statorwicklungen 15, welche nicht sichtbar im Statorkern 12 angeordnet sind. Die Verschaltungskontakte 21 stehen senkrecht zur Abgriffplatte 20. Die Abgriffplatte 20 weist drei Verbindungselemente 23 zur elektrischen Ausrüstung des Motors auf. Die Verbindungselemente 23 sind als längliche Stecker dargestellt und sind senkrecht zur Abgriffplatte 20 ausgerichtet. Alternativ können die Verbindungselemente 23 auch parallel zur Abgriffplatte 20 angeordnet sein. Die Abgriffplatte 20 weist mehrere kreisförmige Ausnehmungen 22 auf. Die Ausnehmungen 22 dienen dem Anschluss von weiterer Elektronik und weiteren Anschlusskontakten 24.

Der Elektromotor umfasst einen Rotor 30. In der Mitte des Rotors 30 verläuft die Rotorwelle 31, auf der ein Kugellager 32 angebracht ist. Der Rotor 30 ist drehbar im Statorkern 12 untergebracht.

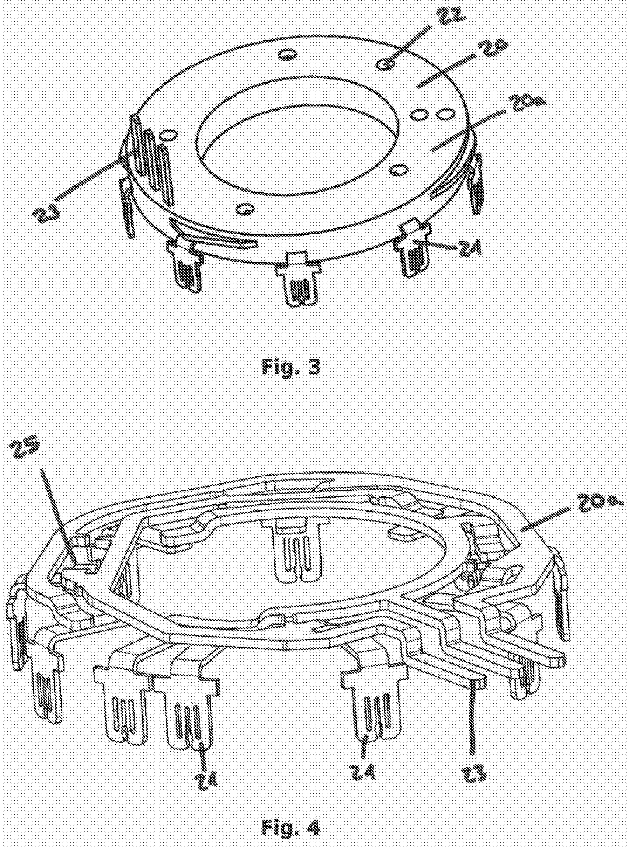

Fig. 3 zeigt eine perspektivische Ansicht einer kunststoffumspritzten Abgriffplatte 20 des Elektromotors gemäß Fig. 2. Die Abgriffplatte 20 kann wie in Fig. 2 dargestellt, an der Stirnseite des Statorblechpakets 11 angebracht sein. Die Abgriffplatte 20 umfasst einen flachen Grundkörper 20a. Der Grundkörper 20a ist ringförmig und weist eine innere Durchgangsöffnung für den Rotor 30 auf. An der Unterseite des Grundkörpers 20a sind äußerlich mehrere Verschaltungskontakte 21 angebracht. Diese sind beispielhaft als Flachstecker ausgeführt. Die Verschaltungskontakte 21 stehen senkrecht zum Grundkörper 20a. Sie können einstückig mit dem Grundkörper 20a verbunden sein, oder stoffbündig an diesen angebracht sein. Die Abgriffplatte 20 weist drei Verbindungselemente 23 zur elektrischen Ausrüstung des Motors auf. Alternativ können auch nur zwei Verbindungselemente angeordnet sein. Die Verbindungselemente 23 sind als längliche Stecker dargestellt und stehen senkrecht auf den Grundkörper 20a. Die Abgriffplatte 20 weist mehrere kreisförmige Ausnehmungen 22 auf. Die Ausnehmungen 22 trennen den Grundkörper 20a an definierten Stellen der Abgriffplatte 20, nach dem Umspritzen, in die verschiedenen elektrischen Phasen des Motors.

Fig. 4 zeigt eine perspektivische Ansicht eines Stanzgitters der Abgriffplatte 20 gemäß Fig. 3. Das Stanzgitter weist einen flachen Grundkörper 20a auf, an den mehrere Verschaltungskonatkte 21 angebracht sind. Die Verschaltungskontakte 21 sind als Flachstecker dargestellt. Die Verschaltungskontakte 21 können zusätzlich paarweise gruppiert sein. Die Flachstecker stehen senkrecht zum Grundkörper 20a. Sie verbinden den Grundkörper 20a mit den Statorwicklungen 15. Einstückig mit dem Stanzgitter sind drei Verbindungselemente 23 ausgebildet. Die länglichen Verbindungselemente 23 stellen die Motorkontakte für die Elektronik dar. Sie verlaufen beispielhaft parallel zum Grundkörper 20a des Stanzgitters. Zusätzlich weist der Grundkörper 20a mehrere Ausstanzungen 25 auf. Diese können längliche oder rechteckige Formen haben. Sie ermöglichen eine Trennung des Grundkörpers 20a in verschiedene elektrische Phasen des Motors .

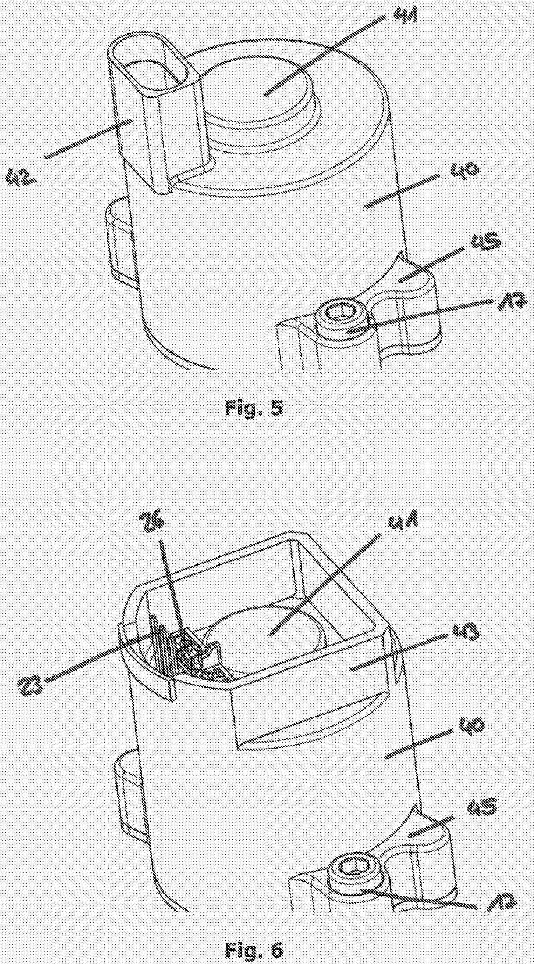

Fig. 5 zeigt eine perspektivische Ansicht eines Gehäuses 40 des Elektromotors gemäß Fig. 2. Das zylinderförmige Gehäuse 40 kann aus einem Kunststoffmaterial, insbesondere einem Duroplastmaterial, gebildet sein. Im Gehäuse 40 ist nicht sichtbar beispielsweise die Motoranordnung, wie in Fig. 2 dargestellt, untergebracht. Das Gehäuse 40 besitzt außen an der Stirnseite ein angeformtes quaderförmiges Steckergehäuse 42 mit abgerundeten Kanten. In das Steckergehäuse 42 ragen nicht sichtbar die Verbindungselemente 23 der Abgriffplatte 20. Das Steckergehäuse 42 kann mit dem Gehäuse 40 stoffbündig, beispielsweise durch Kleben oder Schweißen oder Umspritzen verbunden sein. Alternativ kann das Steckergehäuse 42 auch einteilig mit dem Gehäuse 40 ausgeformt sein. Die Stirnseite des Gehäuses 40 besitzt mittig einen runden Lagersitz 41 für den Rotor 30. An der Unterseite des Gehäuses 40 befindet sich eine Abdeckung 45 für die Schraubvorrichtung 17 und die Schraubverbindung 18 des Gehäusebodens 11a. Die Abdeckung 45 besitzt dieselbe Form wie der Gehäuseboden 11a. Dadurch kann die Abdeckung 45 kraftschlüssig mit dem Gehäuseboden 11a verbunden sein. Die Schraubverbindung 17 ragt aus der Abdeckung 45 hinaus. Die Schraubverbindung 18 ist nicht sichtbar in der Abdeckung 45 untergebracht. Durch die Abdeckung 45 ist die Montagevorrichtung des Gehäusebodens 11a sicher und abdichtend mit dem Gehäuse 40 des Motors verbunden.

Fig. 6 zeigt eine perspektivische Ansicht eines alternativen Gehäuses 40 für den Elektromotor gemäß Fig. 2 mit einem Aufnahmeraum 43 und darin integrierter Positionierelektronik. Das Gehäuse 40 ist ähnlich aufgebaut wie in Fig. 5 ohne Steckergehäuse 42 und besitzt vorzugsweise an der Stirnseite einen angeformten quaderförmigen Aufnahmeraum 43 für die Positionierelektronik zur Positionierung des Rotors 30. Der Aufnahmeraum 43 ist innen hohl. In dieser Ausführungsform ist der Aufnahmeraum 43 einteilig mit dem Gehäuse 40 ausgebildet. Der Aufnahmeraum 43 stellt eine Rahmenumrandung der Elektronik dar. Der Aufnahmeraum 43 kann alternativ auch durch eine Trennwand von dem Stator 10 separiert sein. Da die Elektronik an der Stirnseite des Gehäuses außen platziert ist, ist der Aufnahmeraum 43 an dieser Seite abgerundet, damit die Elektronik sicher im Aufnahmeraum 43 aufgenommen sein kann. Die Form des Aufnahmeraums 43 kann an die verwendete Elektronik angepasst sein. Beispielsweise sind auch runde, eckige oder polygone Formen für den Aufnahmeraum 43 denkbar. Die Größe des Aufnahmeraums 43 richtet sich idealerweise nach der verwendeten Elektronik. Das bedeutet, dass der Aufnahmeraum 43 auch über das Gehäuse hinausragen kann. Der runde Lagersitz 41 des Rotors 30 ragt in den Aufnahmeraum 43 hinein. Linksseitig ragen die Verbindungselemente 23 aus dem Aufnahmeraum 43 heraus. Der Aufnahmeraum 43 kann zur Abdichtung mit einem nicht dargestellten Deckel 46 stoffbündig oder kraftschlüssig verschlossen sein. Neben den Verbindungselementen ist ein Schaltelement 26 mit mehreren Kontaktanschlüssen für die Positionierelektronik angebracht. An der Unterseite des Gehäuses ist dieselbe Abdeckung 45 angebracht, wie in Fig. 5 beschrieben, um das Gehäuse 40 mit dem Gehäuseboden 11a zu verbinden und damit den Motor geschützt und abdichtend im Gehäuse 40 unterzubringen.

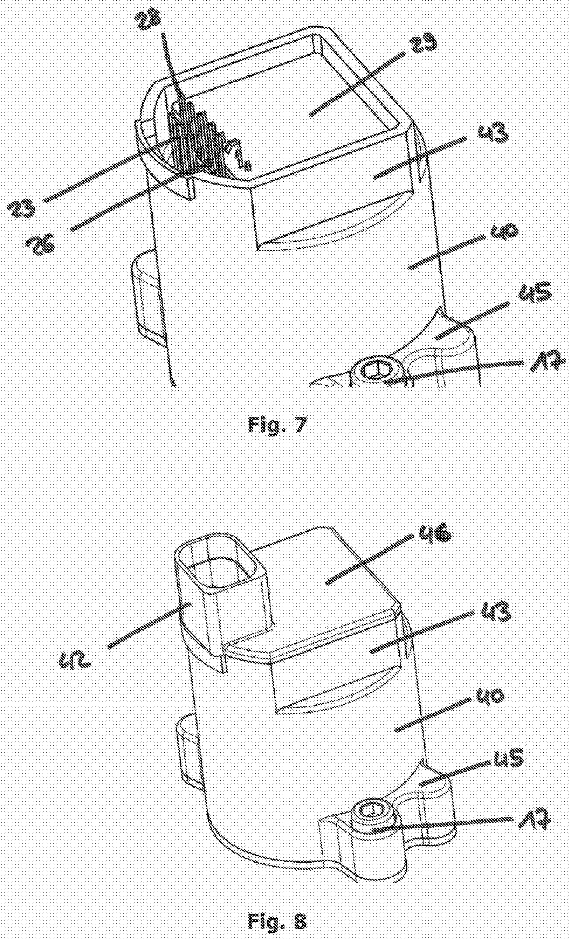

Fig. 7 zeigt eine perspektivische Ansicht des Gehäuses gemäß Fig. 6 mit montierter Platine 29. Die Platine 29 kann auf der dem Motor zugewandten Seite einen Positionssensor aufweisen. An der Unterseite des Gehäuses 40 ist dieselbe Abdeckung 45 angebracht, wie in Fig. 5 beschrieben, um das Gehäuse 40 mit dem Gehäuseboden 11a zu verbinden. Der Aufnahmeraum 43 für die Positionierelektronik ist als angeformter quaderförmiger Rahmen dargestellt, mit einer abgerundeten Seite in der Nähe der Positionierelektronik. Die drei länglichen Verbindungselemente 23 der Motorkontakte ragen aus dem Aufnahmeraum 43 heraus. Das Schaltelement 26 der Positionierelektronik weist im Gegensatz zu Fig. 6 in den Kontaktanschlüssen mehrere längliche Steckerkontakte 28 auf. Die Stecker sind mit der Platine 29 verbunden oder verbindbar. In dieser Ausführungsform ist die Elektronik beispielhaft mit einem Kunststoffmaterial umspritzt. Die Umspritzung kann vorteilhaft ein Duroplastmaterial sein. Dadurch ist die Elektronik geschützt vor äußerer Beschädigung. Die Umspritzung der Elektronik füllt nur den unteren Teil des Aufnahmeraumes 43 aus, sodass die Elektronik sicher im Aufnahmeraum 43 untergebracht ist. Die Steckerkontakte 28 der Positionierelektronik ragen teilweise aus der Umspritzung heraus.

Fig. 8 stellt eine perspektivische Ansicht des Gehäuses gemäß Fig. 7 mit aufgesetztem Deckel 46 und Steckergehäuse 42 dar. An der Unterseite des Gehäuses 40 ist dieselbe Abdeckung 45 angebracht, wie in Fig. 5 beschrieben, um das Gehäuse 40 mit dem Gehäuseboden 11a zu verbinden. Der Aufnahmeraum 43 für die Elektronik ist genauso wie in Fig. 6 und Fig. 7 dargestellt. Die Elektronik kann hierbei wie in Fig. 7 beschrieben mit einem Kunststoffmaterial umspritzt sein. Fig. 8 zeigt eine mögliche Variation eines Deckels 46 für den Aufnahmeraum 43, wie er beispielhaft an die Gehäusevariationen von Fig. 6 und 7 angebracht sein kann. Der Deckel 46 hat dieselbe quaderförmige Form mit einer abgerundeten Seite passend auf den Aufnahmeraum 43 für die Elektronik. Der Deckel 46 kann stoffbündig mit dem Aufnahmeraum 43 verbunden sein, beispielsweise durch Kleben, Schweißen oder Löten. Auch eine kraftschlüssige Anbringung durch eine Schraubverbindung ist denkbar. Idealerweise ist der Deckel 46 abdichtend mit dem Aufnahmeraum 43 verbunden, damit die Elektronik geschützt im Aufnahmeraum 43 untergebracht sein kann. Der Deckel 46 kann hierzu mit einer nicht dargestellten Gummidichtung versehen sein. Diese Gummidichtung kann beispielsweise ein O-Ring oder eine Flachdichtung sein. Am Deckel 46 ist einstückig ein Steckergehäuse 42 angeformt. Das Steckergehäuse 42 ist quaderförmig mit abgerundeten Kanten und steht senkrecht auf den Deckel 46. Das Steckergehäuse 42 kann alternativ auch stoffbündig auf den Deckel 46 angebracht sein. Das Steckergehäuse 42 schützt die drei Verbindungselemente 23, welche von der Abgriffplatte 20 in den Aufnahmeraum 43 der Elektronik hineinragen und teilweise auch aus dem Aufnahmeraum 43 herausragen können.

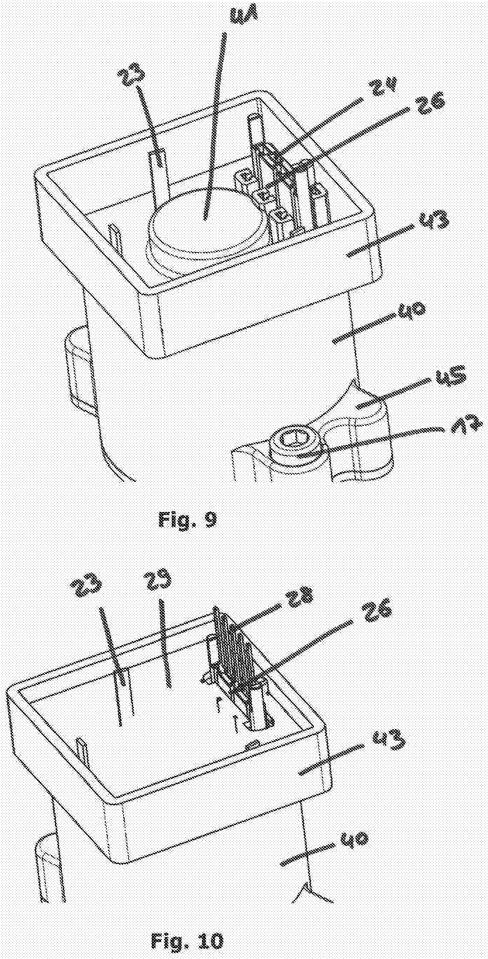

Fig. 9 zeigt eine perspektivische Ansicht eines weiteren, alternativen Gehäuses 40 für den Elektromotor gemäß Fig. 2 mit einem Aufnahmeraum 43 und darin integrierter Steuerungselektronik. An der Unterseite des Gehäuses 40 ist dieselbe Abdeckung 45 angebracht, wie in Fig. 5 beschrieben, um das Gehäuse 40 mit dem Gehäuseboden 11a zu verbinden. Der Aufnahmeraum 43 für die Elektronik stellt einen quaderfrömigen Rahmen an der Stirnseite des Gehäuses 40 dar. Der Aufnahmeraum 43 ist im Gegensatz zu Fig. 6-8 größer als die Stirnseite des Gehäuses 40. Der Aufnahmeraum 43 ragt also über das Gehäuse 40 des Motors hinaus. Der Aufnahmeraum 43 kann einteilig mit dem Gehäuse 40 verbunden sein. Auch eine stoffbündige oder kraftschlüssige Verbindung zum Gehäuse 40 ist denkbar. In der Mitte des Aufnahmeraumes 43 ist der runde Lagersitz 41 für den Rotor 30 sichtbar. Im Aufnahmeraum 43 sind variabel mehrere längliche Verbindungselemente 23 untergebracht. Die Steuerungselektronik umfasst ein Schaltelement 26 nahe am Lagersitz 41 für den Rotor 30. Das Schaltelement 26 besteht aus mehreren hohlen zylinderförmigen Anschlusskontakten 24.

Fig. 10 zeigt eine perspektivische Ansicht des Gehäuses 40 gemäß Fig. 9 mit montierter Platine 29. An der Unterseite des Gehäuses 40 ist dieselbe Abdeckung 45 angebracht, wie in Fig. 5 beschrieben, um das Gehäuse 40 mit dem Gehäuseboden 11a zu verbinden. Der Aufnahmeraum 43 für die Steuerungselektronik ist wie in Fig. 9 als angeformter quaderförmiger Rahmen dargestellt. Das Schaltelement 26 weist im Gegensatz zu Fig. 9 in den zylinderförmigen Anschlusskontakten 24 mehrere dünne längliche Steckerkontakte 28 auf. Die Stecker sind mit der Platine 29 verbunden oder verbindbar. Die Steckerkontakte 28 ragen aus dem Aufnahmeraum 43 heraus. In dieser Ausführungsform ist die Steuerungselektronik wie in Fig. 7 beispielhaft mit einem Kunststoffmaterial umspritzt. Diese Umspritzung kann vorteilhaft ein Duroplastmaterial sein. Die Umspritzung der Elektronik füllt nur den unteren Teil des Aufnahmeraumes 43 aus, sodass die Elektronik sicher im Aufnahmeraum 43 untergebracht ist. Die Steckerkontakte 28 der Steuerungselektronik ragen teilweise aus der Umspritzung heraus.

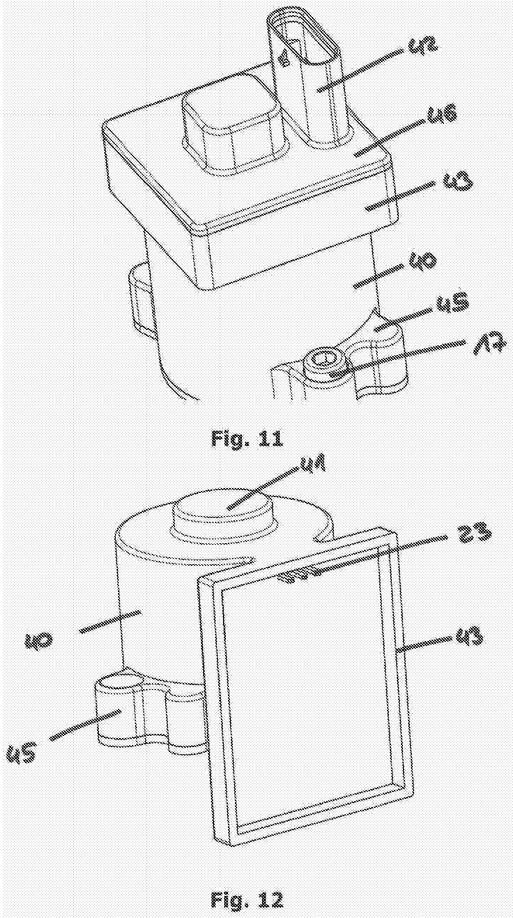

Fig. 11 veranschaulicht eine perspektivische Ansicht des Gehäuses 40 gemäß Fig. 10 mit aufgesetztem Deckel 46 und Steckergehäuse 42. An der Unterseite des Gehäuses 40 ist dieselbe Abdeckung 45 angebracht, wie in Fig. 5 beschrieben, um das Gehäuse 40 mit dem Gehäuseboden 11a zu verbinden. Der Aufnahmeraum 43 für die Elektronik ist genauso wie in Fig. 9 und Fig. 10 dargestellt. Die Elektronik kann hierbei wie in Fig. 10 beschrieben mit einem Kunststoffmaterial umspritzt sein. Fig. 11 zeigt eine Variation eines Deckels 46 für den Aufnahmeraum 43, wie er beispielhaft an die Gehäusevariationen von Fig. 9 und 10 angebracht sein kann. Der Deckel 46 hat dieselbe quaderförmige Form wie der Aufnahmeraum 43 für die Steuerungselektronik. Der Deckel 46 kann stoffbündig mit dem Aufnahmeraum 43 verbunden sein, beispielsweise durch Kleben, Schweißen oder Löten. Auch eine kraftschlüssige Anbringung durch eine Schraubverbindung ist denkbar. Idealerweise ist der Deckel 46 abdichtend mit dem Aufnahmeraum 43 verbunden. Der Deckel 46 kann hierzu mit einer nicht dargestellten Gummidichtung versehen sein, wie sie beispielhaft für Fig. 8 beschrieben wird. Am Deckel ist einstückig ein Steckergehäuse 42 angeformt. Das Steckergehäuse 42 ist quaderförmig mit abgerundeten Kanten und steht senkrecht auf dem Deckel 46.

Fig. 12 stellt eine perspektivische Ansicht eines Gehäuses 40 für einen erfindungsgemäßen Elektromotor nach einem weiteren bevorzugten Ausführungsbeispiel, wobei das Gehäuse 40 einen radial angeordneten Aufnahmeraum 43 aufweist, dar. An der Unterseite des Gehäuses 40 ist dieselbe Abdeckung 45 angebracht, wie in Fig. 5 beschrieben, um das Gehäuse 40 mit dem Gehäuseboden 11a zu verbinden. Im Gegensatz zu den Fig. 5-10 ist der Aufnahmeraum 43 für die Elektronik nun nicht an der Stirnseite des Gehäuses 40 angebracht, sondern radial zur Motorenachse. Das Gehäuse 40 zeigt an der Stirnseite des Motors nur den Lagersitz 41 des Rotors 30. Der quaderförmige Aufnahmeraum 43 ragt über die Länge des Motors hinaus. Der Aufnahmeraum 43 ist einstückig mit dem Gehäuse 40 des Motors verbunden. Die drei Verbindungselemente 23 der Abgriffplatte 20 liegen in dieser Ausführungsform parallel zur Abgriffplatte 20. Sie ragen in den Aufnahmeraum 43 hinein. Die Elektronik kann teilweise zum Schutz mit einem Kunststoffmaterial innerhalb des Aufnahmeraums 43 umspritzt sein.

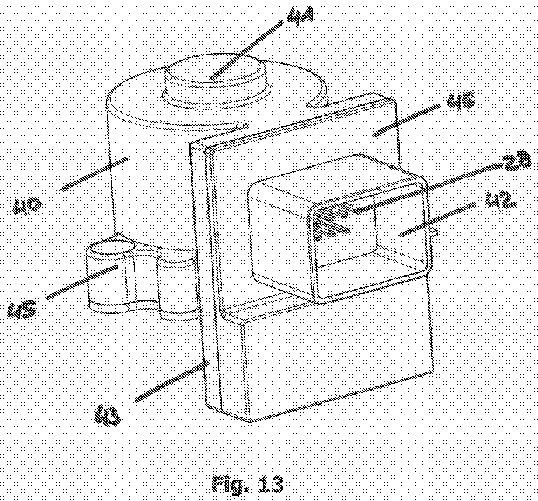

Fig. 13 zeigt eine perspektivische Ansicht des Gehäuses 40 gemäß Fig. 12, wobei der Aufnahmeraum 43 durch einen Deckel 46 mit einem Steckergehäuse 42 verschlossen ist. An der Unterseite des Gehäuses 40 ist dieselbe Abdeckung 45 angebracht, wie in Fig. 5 beschrieben, um das Gehäuse 40 mit dem Gehäuseboden 11a zu verbinden. Wie in Fig. 12 beschrieben, ist der Aufnahmeraum 43 für die Elektronik radial zur Motorenachse angebracht und einstückig mit dem Gehäuse 40 verbunden. Die dargestellte Ausführungsform zeigt einen Deckel 46 mit angeformten Steckergehäuse 42 für einen radialen Aufnahmeraum 43. Idealerweise ist der Deckel 46 abdichtend mit dem Aufnahmeraum 43 verbunden, so dass die Elektronik geschützt im Aufnahmeraum 43 anordbar ist. Der Deckel 46 kann hierzu mit einer nicht dargestellten Gummidichtung versehen sein. In das Steckergehäuse 42 ragen die länglichen Steckerkontakte 28 der Elektronik des Aufnahmeraums 43.

Der beschriebene modulare Aufbau der Elektromotoren mit variabler Statorlänge und variabler Steuerungs- und Positionierelektronik ermöglicht eine flexible und vielfältige Anwendung der Motoren im Bereich der Fluidpumpen. Zur Realisierung der verschiedenen Elektronikmöglichkeiten, können die in Fig. 5-13 beschriebenen Gehäusevariationen verwendet sein. Es sind weitere Kombinationen der Merkmale des Gehäuses 40 je nach Verwendungszweck und Einsatz des Motors denkbar. Beispielsweise kann der Aufnahmeraum 43 für die Elektronik über das Gehäuse 40 hinausragen oder radial am Gehäuse 40 angebracht sein. Der Aufnahmeraum 43 kann einstückig mit dem Gehäuse 40 ausgebildet, oder durch eine Trennwand vom Stator 10 getrennt sein. Die Trennwand kann eine Seitenwand oder axiale Abschlusswand oder eine Zwischenwand des Gehäuses 40 sein. Die Form des Aufnahmeraums 43 und des Steckergehäuses 42 können in allen Motorvariationen verschieden sein. Beispielsweise sind auch runde, eckige oder polygone Formen für den Aufnahmeraum 43 und/oder das Steckergehäuse 42 denkbar. Der Aufnahmeraum 43 kann radial oder axial am Gehäuse 40 angebracht sein.

### Bezugszeichenliste

- 10: Stator
- 11: Statorblechpaket
- 11a: Gehäuseboden
- 11b: Trägerteil
- 12: Statorkern
- 13: Statorzahn
- 14: Statornut
- 15: Statorwicklung
- 16: Isolationsring
- 17: Schraubvorrichtung
- 18: Schraubverbindung
- 20: Abgriffplatte
- 20a: Grundkörper
- 21: Verschaltungskontakt
- 22: Ausnehmung
- 23: Verbindungselement
- 24: Anschlusskontakt
- 25: Ausstanzung
- 26: Schaltelement
- 28: Steckerkontakt
- 29: Platine
- 30: Rotor
- 31: Rotorwelle
- 32: Kugellager
- 40: Gehäuse
- 41: Lagersitz
- 42: Steckergehäuse
- 43: Aufnahmeraum
- 45: Abdeckung
- 46: Deckel
- 50: Öffnung

## Patentansprüche

1. Elektromotor für eine Fluidpumpe, insbesondere eine Ölpumpe, mit einem Gehäuse (40), in dem ein Stator (10), ein Rotor (30) und eine Abgriffplatte (20) angeordnet sind, wobei
- die Abgriffplatte (20) Verschaltungskontakte (21) zur elektrischen Verbindung mit Wicklungen des Stators (15) aufweist,
- die Abgriffplatte (20) durch ein Kunststoffmaterial gebildet und/oder umspritzt ist,
- der Stator (10) durch eine Umspritzung ummantelt ist, die einen Lagersitz (41) für den Rotor (30) bildet **dadurch gekennzeichnet dass**,
- die Abgriffplatte Verbindungselemente (23) zur Verbindung mit einer Steuerungselektronik und/oder Positionierelektronik aufweist und dass
- das Gehäuse (40) einen Aufnahmeraum (43) für die Steuerungselektronik und/oder Positionierelektronik aufweist, der durch eine Trennwand von dem Stator (10) getrennt ist.

2. Elektromotor nach Anspruch 1,
**dadurch gekennzeichnet, dass**
die Abgriffplatte (20) durch ein Stanzgitter gebildet ist.

3. Elektromotor nach Anspruch 1 oder 2,
**dadurch gekennzeichnet, dass**
die Abgriffplatte (20) wenigstens zwei Verbindungselemente (23) aufweist, die im Wesentlichen rechtwinklig oder parallel zur Abgriffplatte (20) ausgerichtet sind.

4. Elektromotor nach einem der vorhergehenden Ansprüche,
**dadurch gekennzeichnet, dass**
die Abgriffplatte (20) mit einem Kunststoffmaterial oder Keramikmaterial verschweißt oder warmverpresst oder verklebt und/oder beklebt und/oder umspritzt und/oder vergossen ist.

5. Elektromotor nach Anspruch 1,
**dadurch gekennzeichnet, dass**
sich die Verbindungselemente (23) durch die Trennwand erstrecken, wobei die Trennwand eine Seitenwand oder eine axiale Abschlusswand oder eine Zwischenwand des Gehäuses (40) bildet.

6. Elektromotor nach einem der vorhergehenden Ansprüche,
**dadurch gekennzeichnet, dass**
im Aufnahmeraum (43) eine Platine (29) der Steuerungselektronik und/oder Positionierelektronik angebracht ist.

7. Elektromotor nach Anspruch 6,
**dadurch gekennzeichnet, dass**
die Platine (29) mit den Verbindungselementen (23) elektrisch verbindbar oder verbunden ist.

8. Elektromotor nach einem der vorhergehenden Ansprüche
**dadurch gekennzeichnet, dass**
die Steuerungselektronik und/oder die Positionierelektronik mit einem Kunststoffmaterial oder Keramikmaterial umspritzt ist.

9. Elektromotor nach einem der vorhergehenden Ansprüche,
**dadurch gekennzeichnet, dass**
die Umspritzung ein Kunststoffmaterial aufweist, das einstückig bzw. einteilig mit dem Kunststoffmaterial zum Umspritzen der Abgriffplatte (20) und/oder der Platine (29) ausgebildet ist.

10. Modulare Motorfamilie zur Bildung unterschiedlicher, insbesondere unterschiedlich leistungsstarker, Fluidpumpen umfassend mehrere, bürstenlose Elektromotoren, nach einem der vorhergehenden Ansprüche, wobei jeder Elektromotor ein Gehäuse (40) aufweist, in dem ein Stator (10) und ein Rotor (30) und/oder eine Abgriffplatte (20) angeordnet sind, wobei
- die Abgriffplatte (20) Verschaltungskontakte (21) zur elektrischen Verbindung mit Wicklungen des Stators (15) und Verbindungselemente (23) zur Verbindung mit einer Steuerungselektronik und/oder Positionierelektronik aufweist, und
- der Stator (10) durch eine Umspritzung ummantelt ist, die einen Lagersitz (41) für den Rotor (30) bildet,
und wobei sich die einzelnen Elektromotoren durch unterschiedliche Motordurchmesser und/oder Motorlängen und/oder Ausstattungsvarianten voneinander unterscheiden, wobei die Ausstattungsvarianten folgende Ausstattungsmerkmale aufweisen:
- eine Steuerungselektronik zur Ansteuerung von Wicklungen des Stators (15), die in dem Gehäuse (40) angeordnet ist, und/oder
- wenigstens einen in den Elektromotor integrierten Positionssensor .

11. Motorfamilie nach Anspruch 10,
**dadurch gekennzeichnet, dass**
das Gehäuse (40) in einer Ausstattungsvariante an einem längsaxialen Ende einen stirnseitigen Aufnahmeraum (43) für die Steuerungselektronik und/oder Positionierelektronik bildet.

12. Motorfamilie nach Anspruch 11,
**dadurch gekennzeichnet, dass**
die Abgriffplatte (20) wenigstens zwei Verbindungselemente (23) aufweist, die rechtwinklig zu einer Ringfläche der Abgriffplatte (20) ausgerichtet sind und in den stirnseitigen Aufnahmeraum (43) einragen.

13. Motorfamilie nach Anspruch 10,
**dadurch gekennzeichnet, dass**
das Gehäuse (40) in einer Ausstattungsvariante auf einem Umfang einen umfangsseitigen Aufnahmeraum (43) für die Steuerungselektronik und/oder Positionierelektronik bildet.

14. Motorfamilie nach Anspruch 13,
**dadurch gekennzeichnet, dass**
die Abgriffplatte (20) wenigstens zwei Verbindungselemente (23) aufweist, die parallel zu einer Ringfläche der Abgriffplatte (20) ausgerichtet sind und in den umfangsseitigen Aufnahmeraum (43) einragen.

15. Motorfamilie mit mehreren Elektromotoren unterschiedlicher Motordurchmesser und/oder Motorlängen, wobei die Elektromotoren mit oder ohne Positionssensor und/oder mit oder ohne Steuerungselektronik ausgerüstet sind.

16. Motorfamilie nach einem der Ansprüche 10 bis 15, wobei alle Elektromotoren der Motorfamilie wenigstens nach einem der Ansprüche 1 bis 9 ausgebildet sind.

17. Verfahren zur Herstellung eines Elektromotors nach einem der Ansprüche 1 bis 9, mit vorbestimmten Spezifikationen für eine Fluidpumpe, insbesondere Ölpumpe, mit einem Gehäuse (40), in dem ein Stator (10), ein Rotor (30) und eine Abgriffplatte (20) angeordnet sind und/oder für eine Motorfamilie nach einem der Ansprüche 10 bis 16, zur Bildung unterschiedlicher, insbesondere unterschiedlich leistungsstarker, Fluidpumpen umfassend mehrere, bürstenlose Elektromotoren, wobei jeder Elektromotor ein Gehäuse (40) aufweist, in dem ein Stator (10) und ein Rotor (30) und/oder eine Abgriffplatte (20) angeordnet sind, wobei mehrere Standardkomponenten miteinander kombiniert werden, um eine zuvor festgelegte Spezifikation zu erfüllen, und wobei die Standardkomponenten folgendes aufweisen:
- ein oder mehrere Elektromotoren mit unterschiedlichen Motordurchmessern und/oder Motorlängen, und/oder
- ein oder mehrere unterschiedliche Positionssensoren zur Integration in die Elektromotoren, und/oder
- ein oder mehrere unterschiedliche Steuerungselektroniken zur Steuerung der Elektromotoren, wobei die Steuerungselektroniken in einem Aufnahmeraum (43) eines Gehäuses (40) des Elektromotors anordbar sind.

## Claims

1. Electric motor for a fluid pump, in particular an oil pump, comprising a housing (40) in which a stator (10), a rotor (30) and a tapping plate (20) are arranged,
- the tapping plate (20) having interconnection contacts (21) for electrically connecting to windings of the stator (15),
- the tapping plate (20) being formed and/or overmoulded by a plastics material,
- the stator (10) being encased by an overmould that forms a bearing seat (41) for the rotor (30), **characterised in that**
- the tapping plate has connection elements (23) for connecting to a control electronics and/or positioning electronics, and **in that**
- the housing (40) has a receiving space (43) for the control electronics and/or positioning electronics, said receiving space being separated from the stator (10) by a partition.

2. Electric motor according to claim 1,
**characterised in that**
the tapping plate (20) is formed by a punch grid.

3. Electric motor according to either claim 1 or claim 2,
**characterised in that**
the tapping plate (20) has at least two connection elements (23) oriented substantially at right angles to or in parallel with the tapping plate (20).

4. Electric motor according to any of the preceding claims,
**characterised in that**
the tapping plate (20) is welded or hot-pressed or bonded and/or glued and/or overmoulded and/or cast using a plastics material or ceramic material.

5. Electric motor according to claim 1,
**characterised in that**
the connection elements (23) extend through the partition, the partition forming a side wall, an axial end wall or an intermediate wall of the housing (40).

6. Electric motor according to any of the preceding claims,
**characterised in that**
a printed circuit board (29) of the control electronics and/or positioning electronics is fitted in the receiving space (43).

7. Electric motor according to claim 6,
**characterised in that**
the printed circuit board (29) can be or is electrically connected to the connection elements (23).

8. Electric motor according to any of the preceding claims,
**characterised in that**
the control electronics and/or the positioning electronics is/are overmoulded by a plastics material or ceramic material.

9. Electric motor according to any of the preceding claims,
**characterised in that**
the overmould comprises a plastics material that is formed in one piece or as one part with the plastics material for overmoulding the tapping plate (20) and/or the printed circuit board (29).

10. Modular motor family for creating different fluid pumps, in particular fluid pumps of different powers, comprising a plurality of brushless electric motors according to any of the preceding claims, wherein each electric motor has a housing (40) in which a stator (10) and a rotor (30) and/or a tapping plate (20) are arranged, wherein
- the tapping plate (20) has interconnection contacts (21) for electrically connecting to windings of the stator (15) and connection elements (23) for connecting to a control electronics and/or positioning electronics, and
- the stator (10) is encased by an overmould that forms a bearing seat (41) for the rotor (30),
and wherein the individual electric motors differ from one another on account of different motor diameters and/or motor lengths and/or configuration variants, wherein the configuration variants have the following configuration features:
- a control electronics, arranged in the housing (40), for actuating windings of the stator (15), and/or
- at least one position sensor integrated in the electric motor.

11. Motor family according to claim 10,
**characterised in that**
in one configuration variant, the housing (40) forms, at one longitudinal axial end, an end-face receiving space (43) for the control electronics and/or positioning electronics.

12. Motor family according to claim 11,
**characterised in that**
the tapping plate (20) has at least two connection elements (23), which are oriented at right angles to an annular surface of the tapping plate (20) and protrude into the end-face receiving space (43).

13. Motor family according to claim 10,
**characterised in that**
in one configuration variant, the housing (40) forms a circumferential receiving space (43) for the control electronics and/or positioning electronics around a circumference.

14. Motor family according to claim 13,
**characterised in that**
the tapping plate (20) has at least two connection elements (23), which are oriented in parallel with an annular surface of the tapping plate (20) and protrude into the circumferential receiving space (43).

15. Motor family comprising a plurality of electric motors of different motor diameters and/or motor lengths, wherein the electric motors are equipped or are not equipped with a position sensor and/or are equipped or are not equipped with a control electronics.

16. Motor family according to any of claims 10 to 15, wherein all the electric motors of the motor family are formed according to at least one of claims 1 to 9.

17. Method for producing an electric motor according to any of claims 1 to 9 using predefined specifications for a fluid pump, in particular an oil pump, that comprises a housing (40) in which a stator (10), a rotor (30) and a tapping plate (20) are arranged and/or for a motor family according to any of claims 10 to 16 for creating different fluid pumps, in particular fluid pumps of different powers, that comprise a plurality of brushless electric motors, wherein each electric motor has a housing (40) in which a stator (10) and a rotor (30) and/or a tapping plate (20) are arranged, wherein a plurality of standard components are combined with one another to meet the predefined specification, and wherein the standard components have the following:
- one or more electric motors of different motor diameters and/or motor lengths, and/or
- one or more different position sensors for integrating in the electric motors, and/or
- one or more different control electronics for controlling the electric motors, wherein the control electronics can be arranged in a receiving space (43) of a housing (40) of the electric motor.

## Revendications

1. Moteur électrique pour une pompe à fluide, notamment une pompe à huile, comprenant un carter (40) dans lequel sont agencés un stator (10), un rotor (30) et une plaque de piquages de branchement (20), moteur électrique dans lequel
- la plaque de piquages de branchement (20) comporte des contacts de mise en circuit (21) pour la liaison électrique avec des enroulements de stator (15),
- la plaque de piquages de branchement (20) est réalisée en une matière plastique et/ou est surmoulée avec une matière plastique,
- le stator (10) est enveloppé par un surmoulage par injection, qui forme une portée de palier (41) pour le rotor (30),
**caractérisé en ce que**
- la plaque de piquages de branchement comporte des éléments de liaison (23) pour assurer la liaison avec une électronique de commande et/ou une électronique de positionnement, et **en ce que**
- le carter (40) comporte une chambre d'accueil (43) pour l'électronique de commande et/ou l'électronique de positionnement, qui est séparée du stator (10) par une paroi de séparation.

2. Moteur électrique selon la revendication 1, **caractérisé en ce que** la plaque de piquages de branchement (20) est formée par une grille découpée.

3. Moteur électrique selon la revendication 1 ou la revendication 2, **caractérisé en ce que** la plaque de piquages de branchement (20) comporte au moins deux éléments de liaison (23), qui sont orientés sensiblement de manière perpendiculaire ou parallèle à la plaque de piquages de branchement (20).

4. Moteur électrique selon l'une des revendications précédentes, **caractérisé en ce que** la plaque de piquages de branchement (20) est soudée ou pressée à chaud ou collée à une matière plastique ou une matière céramique, et/ou est encollée et/ou surmoulée et/ou noyée par une telle matière.

5. Moteur électrique selon la revendication 1, **caractérisé en ce que** les éléments de liaison (23) s'étendent à travers la paroi de séparation, la paroi de séparation formant une paroi latérale ou une paroi terminale axiale ou une paroi intermédiaire du carter (40).

6. Moteur électrique selon l'une des revendications précédentes, **caractérisé en ce que** dans la chambre d'accueil (43) est placée une platine (29) de l'électronique de commande et/ou de l'électronique de positionnement.

7. Moteur électrique selon la revendication 6, **caractérisé en ce que** la platine (29) peut être reliée ou est reliée électriquement aux éléments de liaison (23).

8. Moteur électrique selon l'une des revendications précédentes, **caractérisé en ce que** l'électronique de commande et/ou l'électronique de positionnement est ou sont surmoulée(s) par une matière plastique ou une matière céramique.

9. Moteur électrique selon l'une des revendications précédentes, **caractérisé en ce que** le surmoulage comprend une matière plastique, qui est réalisée d'un seul tenant, à savoir en une seule partie, avec la matière plastique destinée au surmoulage de la plaque de piquages de branchement (20) et/ou de la platine (29).

10. Famille de moteurs modulaire pour réaliser des pompes à fluides différentes, notamment de puissances différentes, comprenant plusieurs moteurs électriques sans balais, selon l'une des revendications précédentes, chaque moteur électrique comportant un carter (40) dans lequel sont agencés un stator (10) et un rotor (30) et/ou une plaque de piquages de branchement (20), moteur électrique dans lequel
- la plaque de piquages de branchement (20) comporte des contacts de mise en circuit (21) pour la liaison électrique avec des enroulements de stator (15), et des éléments de liaison (23) pour assurer la liaison avec une électronique de commande et/ou une électronique de positionnement, et
- le stator (10) est enveloppé par un surmoulage par injection, qui forme une portée de palier (41) pour le rotor (30),
et les moteurs électriques individuels se distinguant les uns des autres par différents diamètres de moteur et/ou longueurs de moteur et/ou variantes d'équipement, les variantes d'équipement présentant les caractéristiques d'équipement suivantes :
- une électronique de commande pour assurer la commande d'enroulements du stator (15), qui est agencée dans le carter (40), et/ou
- au moins un détecteur de position intégré au moteur électrique.

11. Famille de moteurs selon la revendication 10, **caractérisée en ce que** dans une variante d'équipement, le carter (40) forme au niveau d'une extrémité axiale longitudinale, une chambre d'accueil (43) frontale, pour l'électronique de commande et/ou l'électronique de positionnement.

12. Famille de moteurs selon la revendication 11, **caractérisée en ce que** la plaque de piquages de branchement (20) comporte au moins deux éléments de liaison (23), qui sont orientés perpendiculairement à une surface annulaire de la plaque de piquages de branchement (20) et s'engagent dans la chambre d'accueil (43) frontale.

13. Famille de moteurs selon la revendication 10, **caractérisée en ce que** dans une variante d'équipement, le carter (40) forme au niveau de sa périphérie, une chambre d'accueil (43) de périphérie, pour l'électronique de commande et/ou l'électronique de positionnement.

14. Famille de moteurs selon la revendication 13, **caractérisée en ce que** la plaque de piquages de branchement (20) comporte au moins deux éléments de liaison (23), qui sont orientés parallèlement à une surface annulaire de la plaque de piquages de branchement (20) et s'engagent dans la chambre d'accueil (43) de périphérie.

15. Famille de moteurs comprenant plusieurs moteurs électriques de différents diamètres de moteur et/ou de différentes longueurs de moteur, les moteurs électriques étant équipés ou non d'un détecteur de position et/ou étant équipés ou non d'une électronique de commande.

16. Famille de moteurs selon l'une des revendications 10 à 15, tous les moteurs électriques de la famille de moteurs étant réalisés au moins selon l'une des revendications 1 à 9.

17. Procédé de fabrication d'un moteur électrique selon l'une des revendications 1 à 9, avec des spécifications prédéterminées pour une pompe à fluide, notamment une pompe à huile, et comprenant un carter (40) dans lequel sont agencés un stator (10), un rotor (30) et une plaque de piquages de branchement (20), et/ou pour une famille de moteurs selon l'une des revendications 10 à 16, pour réaliser des pompes à fluides différentes, notamment de puissances différentes, comprenant plusieurs moteurs électriques sans balais, chaque moteur électrique présentant un carter (40) dans lequel sont agencés un stator (10) et un rotor (30) et/ou une plaque de piquages de branchement (20), procédé d'après lequel on combine mutuellement plusieurs composants standards pour satisfaire à une spécification fixée au préalable, et d'après lequel les composants standards comprennent :
- un ou plusieurs moteurs électriques de différents diamètres de moteur et/ou de différentes longueurs de moteur, et/ou
- un ou plusieurs détecteurs de position différents destinés à l'intégration dans les moteurs électriques, et/ou
- une ou plusieurs électroniques de commande différentes destinées à la commande des moteurs électriques, les électroniques de commande pouvant être agencées dans une chambre d'accueil (43) d'un carter (40) du moteur électrique.
